# EUROPEAN PATENT APPLICATION

(11) **EP 2 611 196 A2**
(43) Date of publication of application: **03.07.2013**
(21) Application number: 12194144.7
(22) Date of filing: 23.11.2012
(51) Int. Cl.: H04N 21/422

(54) **Electronic apparatus and method of controlling the same**

(30) Priority: 30.12.2011 KR 20110147466
(71) Applicant: Samsung Electronics Co., Ltd, Gyeonggi-do 443-742 (KR)
(72) Inventor: Han, Sang-jin, Gyeonggi-do (KR); Kwon, Yong-hwan, Gyeonggi-do (KR); Kim, Jung-geun, Gyeonggi-do (KR)
(74) Representative: Taor, Simon Edward William

(57) **Abstract**

An electronic apparatus and a method of controlling the electronic apparatus are provided. The method includes: receiving a two hand start command which is to perform a motion task using two hands; if the two hand start command is input, changing a mode of the electronic apparatus to a two hand task mode which is to perform the motion task using the two hands; and if the mode of the electronic apparatus is changed to the two hand task mode, displaying a two hand input guide graphical user interface (GUI) which is to perform the motion task using the two hands. Therefore, a user further intuitively and conveniently perform a function of the electronic apparatus, such as a zoom-in/zoom-out, by using two hands.

## Description

### Field

Exemplary embodiments relate to an electronic apparatus and a method of controlling the same, and more particularly, to an electronic apparatus which is controlled according to a motion input through a motion input unit, and a method of controlling the same.

### Description of the Related Art

Recent technological developments have increased supply of various types of electronic apparatuses. In particular, various types of electronic apparatuses including a TV have been used in consumer homes. The functions of these electronic apparatuses have expanded according to requests of users. For example, a TV can connect to the Internet to support an Internet service. Also, a user views a larger number of digital broadcast channels through the TV.

Therefore, various input methods for efficiently using various functions of an electronic apparatus are required. For example, an input method using a remote controller, an input method using a mouse, an input method using a touch pad, etc. are applied to the electronic apparatus.

However, it is difficult to efficiently use the various functions of the electronic apparatus by using only this simple method. For example, if all functions of the electronic apparatus are realized to be controlled through only a remote controller, increasing the number of buttons of the remote controller is inevitable. In this case, it is not easy for a general user to learn how to use the remote controller and a chance of pressing a wrong button increases. Also, according to a method of displaying various menus on a screen to assist a user to search for and select a corresponding menu, the user is to check a complicated menu tree in order to select a desired menu, which may be difficult and confusing to a user.

In order to overcome this inconvenience, a motion detection technology has been developed to further conveniently and intuitively control an electronic apparatus. In other words, a technology for recognizing a motion of a user (e.g., gesture recognition) to control an electronic apparatus is becoming a focus of today's developments.

However, an existing motion recognition technology provides a way to detect and recognize a motion made by only one user hand and thus, its use in a current electronic apparatus which requires various input methods is limited.

### Summary

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide an electronic apparatus which can perform a two hand task mode by using two hands of a user input through a motion input unit, and a method of controlling the electronic apparatus.

According to an aspect of the exemplary embodiments, there is provided a method of controlling an electronic apparatus. The method may include: receiving input indicating a motion of a user; if the received input indicates the motion of the user, changing the electronic apparatus to a two hand task mode in which a two-hand motion is input for performing a corresponding task in which a graphical user interface (GUI) guide is provided to guide with the two hands motion input.

The receiving input may include: if the received input is input via one hand, changing the mode of the electronic apparatus to a motion task mode which is to perform a motion task; and if the received input is further input using the other hand when the electronic apparatus is in the motion task mode, the received input indicates the two-hand mode and the GUI guide is provided.

The receiving the input may include: receiving a shake motion in which the two hands of a user shake a plurality of times, and determining that the received input indicates the two-hand task mode based on the received shake motion.

The corresponding task is a task of magnifying or reducing a display screen.

The method may further include: if a motion of moving the two hands away from each other is input when the two hand GUI guide is displayed in an area of the display screen, magnifying a display screen based on a predetermined location in an area where the two hand input GUI guide is displayed; and if a motion of moving the two hands close together is input, reducing a display screen based on the predetermined location in the area where the two hand input GUI guide is displayed.

The display of the two hand GUI guide may include: displaying a two hand circular input GUI guide in a central area of the display screen.

The method may further include: if a motion of moving the two hands is input, moving two hand control GUI of the magnifying glass animation effect so that the two hand circular input GUI guide corresponds to the motion of moving the two hands.

The two hand GUI guide may be two pointers which are displayed in places corresponding to positions of the two hands of a user. The corresponding task may be a task of magnifying or reducing the display screen by using the two pointers.

According to yet another aspect of exemplary embodiments, there is provided an electronic apparatus including: a motion input unit which receives input indicating a motion of a user; and a controller which controls the electronic apparatus based on the input received by the motion input unit. If the input received by the motion input unit indicates the motion of the user, the controller changes a mode of the electronic apparatus to a two hand task mode in which a two-hand motion is received by the motion input unit for performing a corresponding task and provides a two hand GUI guide to guide with the two-hand motion.

If the input received by the motion input unit is a motion of a one hand, the controller may change the mode of the electronic apparatus to a motion task mode which is to perform a motion task, and, if further input is received using the other hand by the motion input unit in the motion task mode, the controller may change the mode of the electronic apparatus to the two-hand task mode and provide the two hand GUI guide.

If the motion input unit receives a shake motion from two hands of a user, said shake motion being repeated a plurality of times, the controller may determine that the received input indicates the two-hand task mode.

The corresponding task may be a task of magnifying or reducing a display screen.

The electronic apparatus may further include a display, which displays data on the display screen. If a motion is moving the two hands away from each other is received by the motion input unit when the two hand GUI guide is displayed in an area of the display screen, the controller may magnify the display screen based on a predetermined location in an area where the two hand GUI guide is displayed. If the motion is moving the two hands close together is received by the motion input unit when the two hands GUI guide is displayed in the area of the display screen, the controller reduces the display screen based on the predetermined location in the area where the two hand GUI guide is displayed.

The two hand GUI guide may be a two hand circular input GUI guide which is displayed in a central area of the display screen.

If the motion input unit receives the input indicating a motion of moving the two hands, the controller may move the two hand circular input GUI guide so that the two hand input GUI guide corresponds to the motion of moving the two hands.

The two hand GUI guide may be two pointers which are displayed in places corresponding to positions of the two hands of a user. The corresponding task may be a task of magnifying or reducing the display screen by using the two pointers.

### Brief Description Of The Drawings

The above and/or other aspects will be more apparent by describing certain exemplary embodiments with reference to the accompanying drawings, in which:
FIGS. 1 to 3 are block diagrams illustrating a structure of an electronic apparatus according to various exemplary embodiments;
FIGS. 4 to 7 are views illustrating a method of controlling an electronic apparatus using a two hands motion of a user, according to various exemplary embodiments; and
FIG. 8 is a flowchart illustrating a method of controlling an electronic apparatus using a two hands motion of a user, according to an exemplary embodiment.

### Detailed Description Of The Exemplary Embodiments

Exemplary embodiments are described in greater detail with reference to the accompanying drawings.

In the following description, the same drawing reference numerals are used for the same or analogous elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

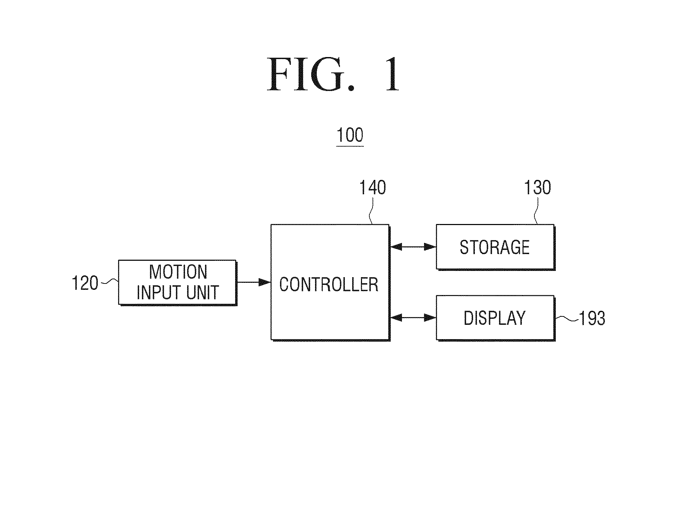

FIG. 1 is a schematic block diagram illustrating an electronic apparatus 100 according to an exemplary embodiment.

Referring to FIG. 1, the electronic apparatus 100 includes a motion input unit 120, a storage 130, a controller 140, and a display 193. The electronic apparatus 100 may be realized as a smart TV, a set-top box, a personal computer (PC), or a digital TV, a portable phone, or the like which can be connected to an external network but is not limited thereto. The exemplary electronic apparatus 100 may include one or more of a memory, a processor, a hardware input unit such as a keyboard, and a screen.

The motion input unit 120 receives an image signal (e.g. consecutive frames or a series of images) which is obtained by capturing a motion of a user and provides the image signal to the controller 140. For example, the motion input unit 120 may be realized as a camera including a lens and an image sensor. Also, the motion input unit 120 may be installed in the electronic apparatus 100 or may be installed separately from the electronic apparatus 100. The motion input unit 120 installed separately from the electronic apparatus 100 may be connected to the electronic apparatus 100 through a wire or wireless network. The motion input unit can detect motion gestures of a user's hands by imaging, e.g. without the user needing to hold a sensor.

The storage 130 stores various types of data and programs for driving and controlling the electronic apparatus 100. The storage 130 stores a voice recognition module for recognizing a voice input through a voice input unit and a motion detection module for detecting a motion input through the motion input unit 120.

The storage 130 may include a voice database (DB) and a motion DB. The voice DB refers to a DB in which a preset voice and a voice task matching with the preset voice are recorded. The motion DB refers to a DB in which a preset motion e.g., a gesture, and a motion task which matches a preset motion are recorded.

The display 193 displays an image corresponding to a broadcast signal received through a broadcast receiver. The display 193 may display image data (e.g., a moving picture) input through an external input terminal. The display 193 may display voice guide information for performing a voice task and motion guide information for performing a motion task under the control of the controller 140.

The controller 140 controls the motion input unit 120, the storage 130, and the display 193. The controller 140 may include a read only memory (ROM) and a random access memory (RAM) which store a module and data for controlling a central processing unit (CPU) and the electronic apparatus 100.

If a motion is input through the motion input unit 120, the controller 140 recognizes the motion by using the motion recognition module and the motion DB. In motion recognition, an image (e.g., consecutive frames) input through the motion input unit 120 is divided into a background area and an object which is the subject of a user motion (e.g., a user hand) area by using the motion recognition module and detects and recognizes consecutive motions of the object. If the motion of the user is input (e.g., a hand gesture), the controller 140 stores a received image in the unit of a frame and detects an object by using the stored frame. The controller 140 detects at least one of a shape, a color, and a motion of the object included in the frame in order to detect the object. The controller 140 may track the motion of the detected object by using positions or shape of each object included in a plurality of frames.

The controller 140 determines a user motion according to a motion of the tracked object. For example, the controller 140 determines the motion of the user by using at least one of a change in a shape of an object, in a speed with which the object is moving, and in a position of the object, where these elements are determined by analyzing multiple frames. The motion of the user which can recognized includes one or more of: a grab that is a motion of holding a hand, a pointing move that is a motion of moving a displayed cursor with a hand, a slap that is a motion of moving a hand in one direction at a predetermined speed or more, a shake that is a motion of shaking the hand to the left/right or up/down, and a rotation that is a motion of rotating the hand. Exemplary embodiments may be applied to other motions besides the above-described exemplary motions. For example, a spread motion of spreading out a grabbed hand, etc. may further be included and if a hand is in a fixed position for a predetermined time, it too may be determined as a specific motion.

The controller 140 determines whether the object has left a certain area (e.g., a square of 40cm x 40cm) within a certain time (e.g., 800 ms) in order to determine whether the motion of the user is a particular movement, e.g. the pointing move or the slap. If the object has remain in the certain area within the certain time, the controller 140 may determine the motion of the user as e.g. the pointing move. If the object has left the determined area within the determined time, the controller 140 may determine the motion of the user to be e.g. the slap. According to another exemplary embodiment, if it is determined that the speed of the object is equal to or lower than a preset speed (e.g., 30 cm/s), the controller 140 determines the motion of the user as e.g. the pointing move. If it is determined that the speed of the object exceeds the preset speed, the controller 140 determines the motion of the user as e.g. the slap.

The controller 140 performs a task for the electronic apparatus 100 by using recognized voice and/or motion. The task for the electronic apparatus 100 includes at least one of functions, which may be performed by the electronic apparatus 10, such as a power control, a channel change, a volume adjustment, a play of contents (e.g., a moving picture, music, a picture, etc.), a selection of GUI displayed on the screen, and Internet service (for example, search, browsing, etc).

In particular, if a two hand start command which is to perform the motion task (hereinafter referred to as a two hand task) using the two hands is input, the controller 140 changes a mode of the electronic apparatus 100 to a two hand task mode which is to perform the motion task using the two hands. Here, the two hand task may be a task of performing a zoom-in or zoom-out of a display screen. Herein, another type of a user command instead of the two hand start command may be used to start the two hand task mode. Another type of user input may include input of a specific button on a remote controller, input of a specific button on the electronic apparatus (100) and a user's specific motion.

In particular, the two hand start command which is to perform the two hand task may be input by sequentially using two hands one by one or by simultaneously using two hands.

In detail, if a motion start command using one hand is input through the motion input unit 120, the controller 140 changes the mode of the electronic apparatus 100 to the motion task mode which is to perform the motion task using the one hand. Also, if a motion start command using the other hand is input through the motion input unit 120 when the mode of the electronic apparatus 100 is changed to the motion task mode, the controller 140 may recognize that the two hand start command has been input. The motion start command using the one hand may be a shake motion of shaking one hand to the left and right a plurality of times.

If a shake motion of simultaneously shaking two hands to the left and right a plurality of times is input through the motion input unit 120 in a general control mode which is to control the electronic apparatus 100, the controller 140 may recognize that the two hand start command has been input.

If the mode of the electronic apparatus 100 is changed to the two hand task mode, the controller 140 displays a two hand input guide graphical user interface (GUI) which is to assist in performing the two hand task.

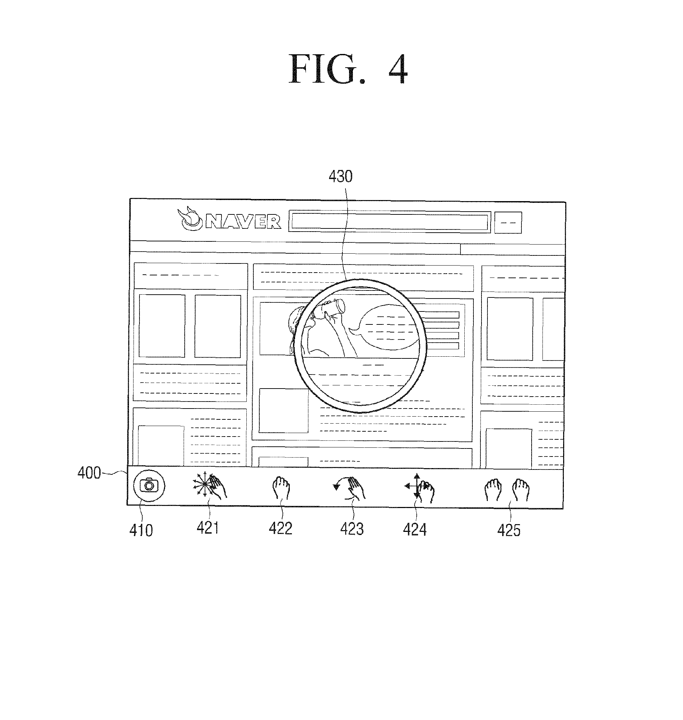

In detail, the two hand input guide GUI may be a GUI in a circular shape of which diameter is a straight line connecting the two points corresponding to the locations of two hands. An exemplary embodiment will be described in greater detail with reference to FIGS. 4 to 6.

If the two hand start command is input through the motion input unit 120, the controller 140 changes the control mode of the electronic apparatus 100 to the two hand task mode and displays motion guide information 400 (shown in FIG. 4) for performing the motion task mode. In some examples, the motion guide information comprises motion guide information for using two hands in a motion command. Here, the motion guide information 400 may be displayed only if the motion start command is input sequentially, one by one, using the two hands but may not be displayed if the motion start command is input using the two hands simultaneously.

If the two hand start command is input, the controller 140 displays a two hand input guide GUI 430 (shown in FIG. 4) which is to perform the two hand task mode. Here, the two hand input guide GUI 430 (shown in FIG. 4) may be the circular GUI as shown in FIG. 4. The two hand input guide GUI 430 is based on the locations of both hands of a user. The shape may indicate the locations of both hands of a user. The GUI may have a different shape performing this function. The shape may be intuitive, and may for example, be an oval, a triangle, a square and a straight line. Although the location of the two hand input guide GUI 430 is determined in accordance with the locations of the two hands, the two hand input guide GUI 430 may be displayed in a central area of the display screen. In some examples, a single shape or object is displayed corresponding to the positions or movements of two hands. The two hand input guide GUI may be superimposed on a displayed image, and in some aspects, movable over that image.

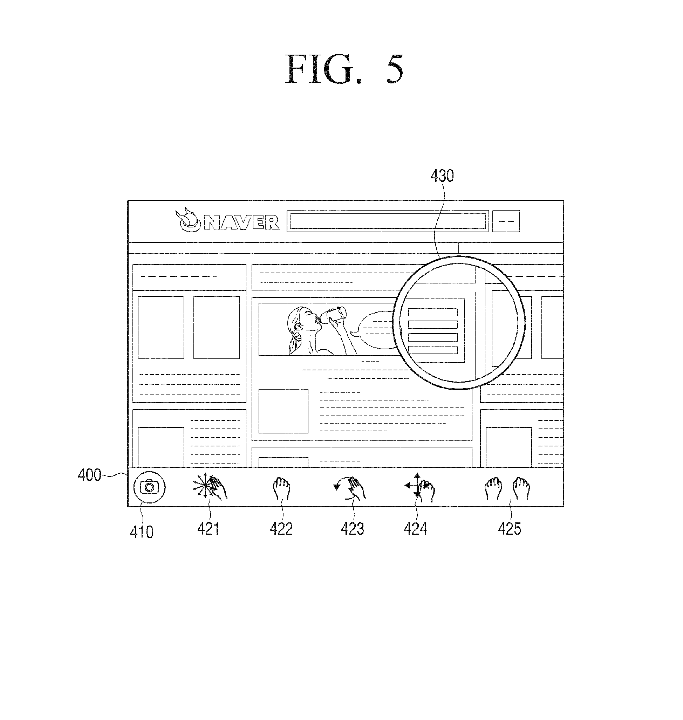

If a motion of the user moving two hands at a predetermined distance is input through the motion input unit 120, the controller 140 moves the two hand input guide GUI 430 of the display screen based on the recognized movement. For example, if a motion of the user moving the two hands to the right at a predetermined distance is input through the motion input unit 120 when the two hand input guide GUI 430 is displayed in the central area of the display screen, as shown in FIG. 4, the controller 140 moves the two hand input guide GUI 430 to the right, as shown in FIG. 5.

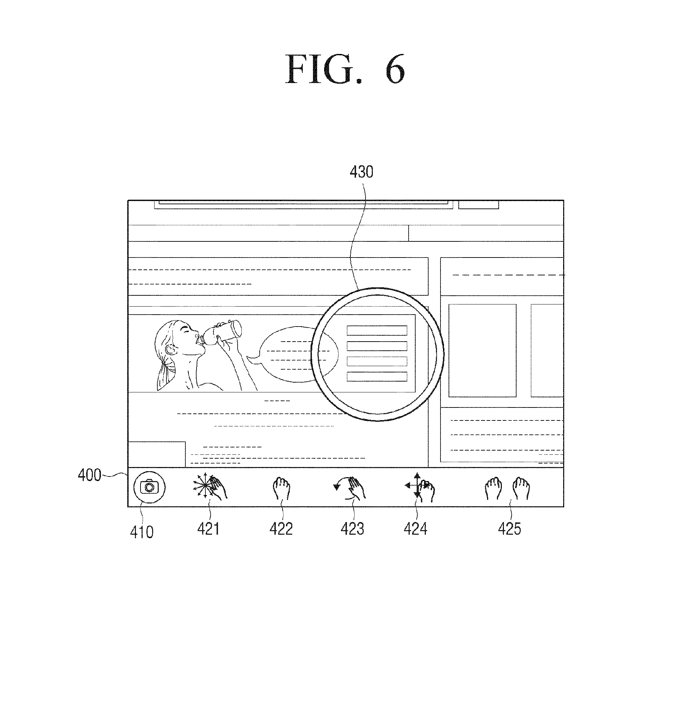

If a motion of moving the two hands away from each other is input when the two hand input guide GUI 430 is displayed in the central area of the display screen, the controller 140 performs a zoom-in based on a determined location in an area where the two hand input guide GUI 430 is displayed. For example, if the motion of moving the two hands away from each other is input when the two hand input guide GUI 430 is displayed in a right area of the display screen, as shown in FIG. 5, the controller 140 may magnify the display screen based on the determined location in an area where the two hand input guide GUI 430 is displayed, as shown in FIG. 6. Here, the motion of moving the two hands away from each other may be a motion of moving the two hands in a direction which moves the two hands away from each other or a motion of fixing one hand and moving only the other hand to make the two hands further away from each other.

If a motion of making the two hands closer together is input when the two hand input guide GUI 430 is displayed in an area of the display screen, the controller 140 may perform a zoom-out based on the determined location in an area where the two hand input guide GUI 430 is displayed. Herein, the determined location in an area where the two hand input guide GUI (430) is displayed may be a center point or a center of gravity for the area where the two hand input guide GUI (430) is displayed.

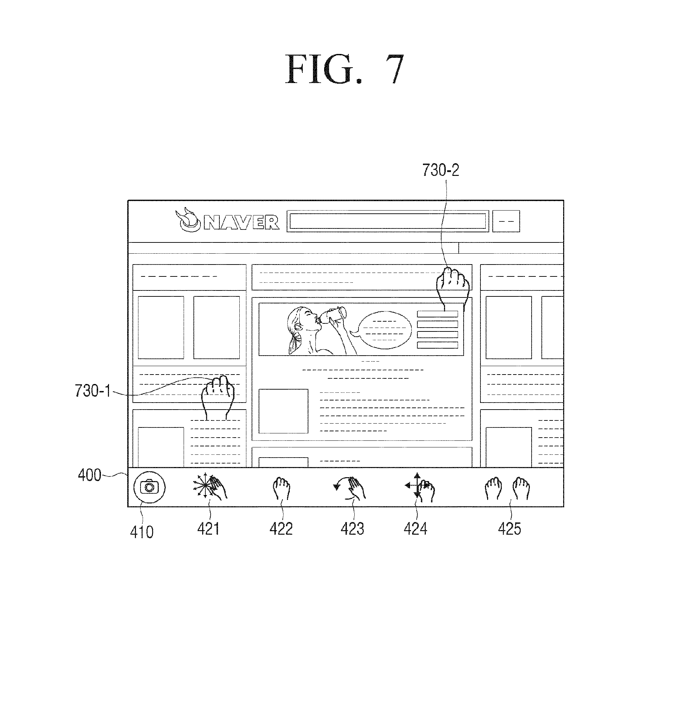

According to yet another exemplary embodiment, the two hand input guide GUI 430 may be realized as two pointer GUIs 730-1 and 730-2 as shown in FIG. 7, rather than a GUI with a circular pointer, as shown in FIGS. 4 to 6. Here, each of the two pointers 730-1 and 730-2 may be one of a circular shape, an oval shape, a palm shape, hand shape, and an arrow shape, but is not limited thereto.

If the motion of moving the two hands away from each other is input when the two pointers 730-1 and 730-2 are displayed in areas of the display screen, the controller 140 performs a zoom-in based on the determined locations related to the two pointers 730-1 and 730-2. If the motion of moving the two hands closer together is input when the two pointers 730-1 and 730-2 are displayed in the areas of the display screen, the controller 140 may perform a zoom-out based on the determined locations related to the two pointers 730-1 and 730-2. Herein, the determined locations related to the two pointers 730-1 and 730-2 may be a center point connecting the two pointers, or may be set as a center point or a center of gravity of figures (for example, a circle, an oval, a triangle, and/or a square) comprising outlines including the two pointers. Also, the location of one of the two pointers may be set as a determined location. In this case, the pointer corresponding to the fixed hand from among the two hands corresponding to the two pointers may be the base point, and the display screen may be enlarged or reduced in accordance with a motion of the moving hand. In some examples, the relative movement and/or position of the two pointers (each corresponding to one hand) provides an input, which can control the displayed image, e.g. to zoom in or out. The direction of movement can indicate the function. For example, zoom in or zoom out is along a direction of movement, e.g. diagonal movement towards or away from each other can indicate zoom in two dimensions.

If the two pointers 730-1 and 730-2 are displayed, and one hand is moved, a position of one corresponding pointer from among the two pointers 730-1 and 730-2 is moved according to the motion of the hand. If both of the two hands are moved, the locations of the two pointers are moved. While the locations of the two pointers are moved, the display screen is enlarged or reduced.

As described above, the user may further intuitively and conveniently perform enlargement or reduction of a screen by using two hands, and provide user experience similar to enlargement/reduction of a screen using multi-touch, which is performed in an electronic apparatus where a touch input is applicable.

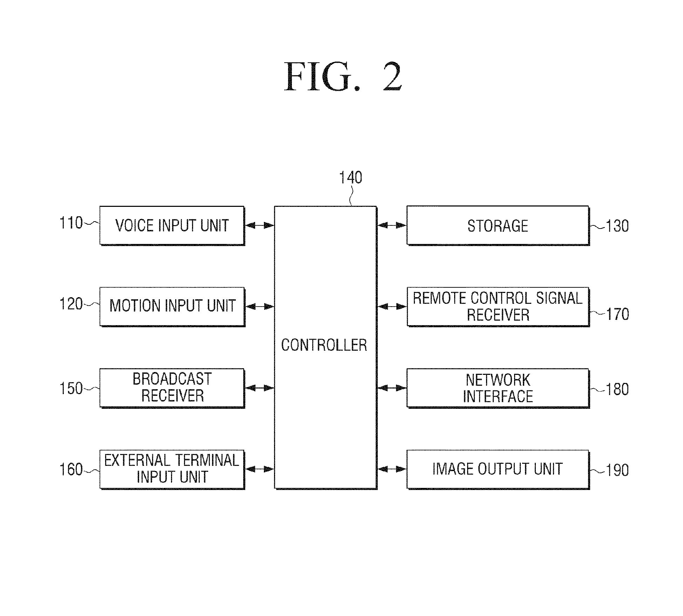

FIG. 2 is a block diagram illustrating a structure of the electronic apparatus 100, according to another exemplary embodiment. Referring to FIG. 2, the electronic apparatus 100 includes a voice input unit 110, a motion input unit 120, a storage 130, a controller 140, a broadcast receiver 150, an external terminal input unit 160, a remote control signal receiver 170, a network interface 180, and an image output unit 190. By way of an example and not by way of a limitation, the electronic apparatus 100 show in FIG. 2 may be realized as a set-top box.

Descriptions of the motion input unit 120, the storage 130, and the controller 140 shown in FIG. 2 are analogous as those of the motion input unit 120, the storage 130, and the controller 140 shown in FIG. 1, and thus their detailed descriptions will be omitted.

The voice input unit 110 receives a voice uttered by a user. The voice input unit 110 converts the input voice signal into an electric signal and outputs the electric signal to the controller 140. Here, the voice input unit 110 may be realized as a microphone. The voice input unit 110 may be installed in the electronic apparatus 100 or may be installed separately from the electronic apparatus 100. The voice input unit 110 installed separately from the electronic apparatus 110 may be connected to the electronic apparatus 100 through a wire or wireless network.

The broadcast receiver 150 receives a broadcast signal from an external source by wire or wireless network. The broadcast signal includes video, audio, and additional data (e.g., an Electronic Program Guide (EPG)). The broadcast receiver 150 may receive the broadcast signal from various sources such as terrestrial broadcasting, cable broadcasting, satellite broadcasting, Internet broadcasting, etc.

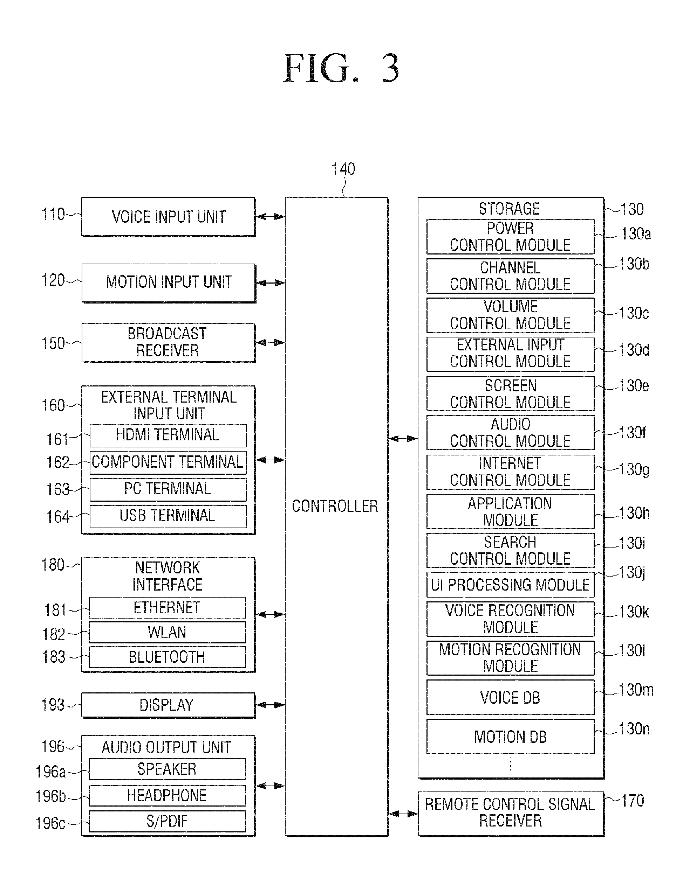

The external terminal input unit 160 receives video data (e.g., a moving picture, etc.), audio data (e.g., music, etc.), etc. from the outside of the electronic apparatus 100. The external terminal input unit 160 may include at least one of a High-Definition Multimedia Interface (HDMI) input terminal 161, a component input terminal 152, a PC input terminal 163, and a universal serial number (USB) input terminal 164 (shown in FIG. 3). The remote control signal receiver 170 receives a remote control signal from an external remote controller. The remote control signal receiver 170 may receive the remote control signal even in a voice task mode or a motion task mode of the electronic apparatus 100. The remote control signal receiver 170 may be implemented as wired or wireless communication interface or as one-way or both-way communication interface.

The network interface unit 180 may connect the electronic apparatus 100 to an external apparatus (e.g., a server, another electronic apparatus, etc.) under control of the controller 140. The controller 140 may control the electronic apparatus 100 to download an application from an external apparatus which is connected to the electronic apparatus 100 through the network interface 180, to provide an internet service such as web browsing to a user, or to receive image data, audio data, text data, etc. from an external apparatus.. The network interface 180 may be implemented as wired/wireless communication interface or various types of both-way communication interface. For example, the network interface unit 180 may provide at least one of Ethernet 181, a wireless local area network (WLAN) 182, and Bluetooth 183 (shown in FIG. 3).

The image output unit 190 outputs the broadcast signal received through the broadcast receiver 150, the data input through the external terminal input unit 160, data stored in the storage 130, or data received through the network interface 180 to an external electronic apparatus (e.g., a monitor, a TV, a speaker, etc.). If the electronic apparatus 100 is equipped with a display or a speaker, data may be output through the display or the speaker.

If user voice is input via the voice input unit 110, the controller 140 recognizes the voice by using a voice recognition module and a voice DB. A voice recognition may be classified into an isolated word recognition which is to divide each word according to a form of an input voice to recognize an uttered voice, a continuous speech recognition which is to recognize continuous words, continuous sentences, and dialogic speeches, and keyword spotting which is an intermediate form in which a predetermined keyword or words are detected and recognized.

If the voice of the user is input, the controller 140 detects a start and an end of a voice uttered by the user from an input voice signal to determine a voice section. The controller 140 may calculate energy of the input voice signal and sort out an energy level of the voice signal according to the calculated energy to detect a voice section through dynamic programming. The controller 140 detects a phoneme, which is a minimum unit of a voice, from the voice signal in the detected voice section based on an acoustic model to generate phoneme data. The controller 140 applies a Hidden Markov Model (HMM) probability model to the generated phoneme data in order to generate text information. However, a method of recognizing user's voice as described above is only an exemplary embodiment, and thus the user's voice may be recognized by using other methods. Therefore, the controller 140 may recognize the user's voice included in the voice signal.

FIG. 3 is a block diagram illustrating the electronic apparatus 100 according to another exemplary embodiment. Referring to FIG. 3, the electronic apparatus 100 includes a voice input unit 110, a motion input unit 120, a storage 130, a controller 140, a broadcast receiver 150, an external terminal input unit 160, a remote control signal receiver 170, a network interface 180, a display 193, and an audio output unit 196. By way of an example only, the electronic apparatus 100 may be a digital TV but is not limited thereto.

Descriptions of the voice input unit 110, the motion input unit 120, the storage 130, the controller 140, the broadcast receiver 150, the external terminal input unit 160, the remote control signal receiver 170, the network interface 180, and the display 193 are analogous to those of elements having the same reference numerals of FIGS. 1 and 2, and thus their detailed descriptions will be omitted.

The audio output unit 196 outputs sound corresponding to a broadcast signal or sound received through the network interface 180 under control of the controller 140. The audio output unit 196 may include at least one of a speaker 196a, a headphone output terminal 196b, and a Sony/Philips Digital Interface (S/PDIF) output terminal 196c.

As shown in FIG. 3, the storage 130 includes a power control module 130a, a channel control module 130b, a volume control module 130c, an external input control module 130d, a screen control module 130e, an audio control module 130f, an Internet control module 130g, an application module 130h, a search control module 130i, a UI processing module 130j, a voice recognition module 130k, a motion recognition module 130l, a voice DB 130m, and a motion DB 130n. These modules 130a through 130n may be realized as pieces of software to respectively perform a power control function, a channel control function, a volume control function, an external input control function, a screen control function, an audio control function, an Internet control function, an application execution function, a search control function, and a UI processing function. The controller 140 may execute the pieces of software stored in the storage 130 to perform the corresponding functions.

As described above, each of the control modules 130a to 130n may be realized by executing software stored in the storage 130 but it may be realized by having each separate hardware execute the respective modules.

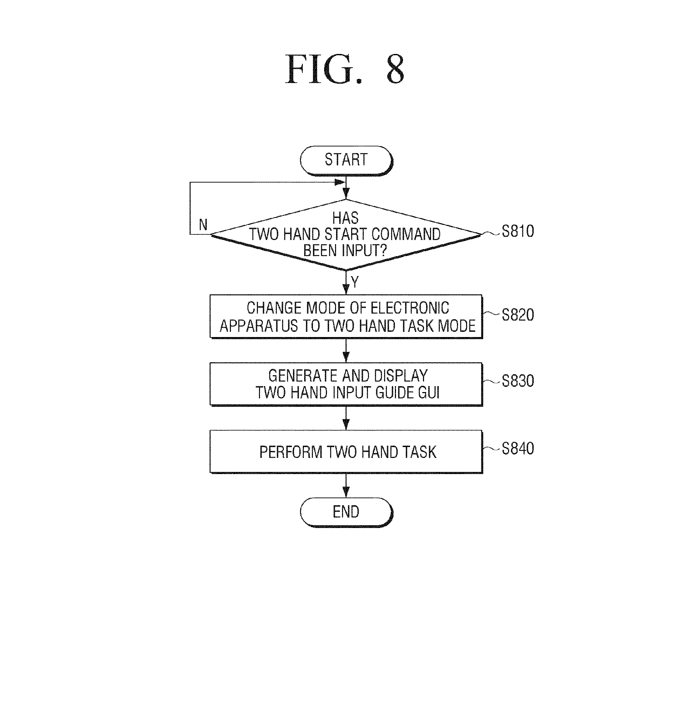

A method of performing a motion task using two hands according to an exemplary embodiment will now be described with reference to FIG. 8.

In operation S810, the electronic apparatus 100 determines whether a two hand start command has been input. Here, the two hand start command may be input by sequentially, one by one, using the two hands or may be input by simultaneously using the two hands.

In detail, if a motion start command using one hand is input using the motion input unit 120, and then a motion start command using the other hand is input, the electronic apparatus 100 may recognize that the two hand start command has been input. If a motion using two hands simultaneously, e.g. a shake motion of simultaneously shaking the two hands to the left and right a plurality of times is input through the motion input unit 120, the electronic apparatus 100 may recognize that the two hand start command has been input.

If it is determined in operation S810 that the two hand start command has been input in operation S810, the electronic apparatus 100 changes a control mode thereof to a two hand task mode in operation S820. Here, the two hand task mode may be a mode in which the electronic apparatus 100 is controlled using motions of the two hands, and a two hand task may include a task of enlarging or reducing a display screen.

If the mode of the electronic apparatus 100 is changed to the two hand task mode, the electronic apparatus 100 generates and displays a two hand input guide GUI which is to perform the two hand task in operation S830. Here, the two hand input guide GUI may be the two hand control GUI 430 of a circular shape, as shown in FIG. 4, or the two pointers 730-1 and 730-2, as shown in FIG. 7. However, this is only exemplary embodiments, and thus another type of two hand control GUI may be displayed in a shape which may indicate the locations of both hands of a user intuitively, such as an oval shape, a triangular shape, a square shape, and a straight line, etc.

In operation S840, the electronic apparatus 100 performs the two hand task by using the two hand input guide GUI.

In detail, if the two hand input guide GUI is the two hand control GUI of a circular shape, and a motion of moving the two hands at a predetermined distance is input through the motion input unit 120, the electronic apparatus 100 may move the two hand control GUI of a circular shape. If a motion of moving the two hands away from or close together is input, the electronic apparatus 100 may enlarge or reduce a display screen based on a display place of the two hand control GUI of a circular shape.

If the two hand input guide GUI is the two pointers, and a motion of moving one hand is input through the motion input unit 120, the electronic apparatus 100 moves one corresponding pointer from among the two pointers. If the motion of moving the two hands away or close to each other is input, the electronic apparatus 100 may enlarge or reduce a display screen based on central places of the two pointers.

According to the above-described various exemplary embodiments, a user may further intuitively and conveniently perform enlargement/reduction of a display screen by using a two hand control GUI, and provide user experience similar to enlargement/reduction of a screen using a multi-touch, which is performed in an electronic apparatus where a touch input is applicable.

Alternatively, the invention may relate to using imaged gestures of two hands simultaneously to control an electronic apparatus, with or without also displaying a corresponding GUI. The invention can be the gesture recognition of two hands, without a particular start to the mode.

A program code for performing a control method according to above-described various exemplary embodiments may be stored on various types of recording media. In detail, the program code may be recorded on various types of terminal-readable recording media such as a random access memory (RAM), a flash memory, a read only memory (ROM), an erasable programmable ROM (EPROM), an electronically erasable and programmable ROM (EEPROM), a register, a hard disk, a removable disk, a memory card, a USB memory, a CD-ROM, etc.

The foregoing exemplary embodiments are merely exemplary and are not to be construed as limiting. The present disclosure may be readily applied to other types of apparatuses. Also, the description of exemplary embodiments is intended to be illustrative, and not to limit the scope of the claims, and many alternatives, modifications, and variations will be apparent to those skilled in the art.

## Claims

1. A method of controlling an electronic apparatus, the method comprising:
receiving a start command for a two hand task mode for recognising a motion task using two hands; and
if the start command is input, changing a mode of the electronic apparatus to a two hand task mode which recognises and performs the motion task using the two hands; and
if the mode of the electronic apparatus is changed to the two hand task mode, displaying a two hand input guide graphical user interface (GUI) which provides guidance on performing the motion task using the two hands.

2. The method of claim 1, wherein the receiving the start command for the two hand mode comprises:
if a motion start command using one hand is input, changing the mode of the electronic apparatus to a motion task mode in which the motion task is performed; and
if a motion start command using the other hand is input when the electronic apparatus is in the motion task mode, recognizing that the start command for the two hand mode has been input.

3. The method of claim 1 or 2, wherein the receiving the start command for the two hand mode comprises:
if a shake motion of simultaneously shaking the two hands a plurality of times is input, recognizing that the two hand start command has been input.

4. The method of any one of claim 1 to claim 3, wherein the motion task using the two hands is a task of magnifying or reducing an image displayed on a display screen.

5. The method of any one of the preceding claims, further comprising:
if a motion of moving the two hands away from each other is input when the two hand input guide GUI is displayed in an area of the display screen, magnifying the display screen based on a predetermined location in the area where the two hand input guide GUI is displayed; and
if a motion of moving the two hands closer together is input when the two hand input guide GUI is displayed in the area of the display screen, reducing the display screen based on the predetermined location in the area where the two hand input guide GUI is displayed.

6. The method of one of claim 4 and claim 5, wherein the display the two hand input guide GUI comprises:
displaying a two hand input guide GUI in a central area of the display screen, and optionally, superimposed on a displayed image.

7. The method of claim 6, further comprising:
if a motion of moving the two hands is input, moving the two hand control GUI such that the two hand circular input guide GUI corresponds to the motion of moving the two hands, and optionally, the two hand control GUI is of the magnifying glass animation effect.

8. The method of one of claim 1 to claim 5, wherein:
the two hand input guide GUI is two pointers which are displayed in positions corresponding to positions of the two hands of a user.

9. An electronic apparatus comprising:
a motion input unit which receives a motion of a user;
a display unit; and
a controller which, if a two hand start command which is to perform a motion task using two hands is input through the motion input unit, is configured to change a mode of the electronic apparatus to a two hand task mode which is to perform the motion task using the two hands and display a two hand input guide GUI, which is to perform the motion task using the two hands.

10. The electronic apparatus of claim 9, wherein, if a motion start command using one hand is input through the motion input unit, the controller changes the mode of the electronic apparatus to a motion task mode in which a motion task is performed, and, if a motion start command using the other hand is input through the motion input unit when the mode of the electronic apparatus is the motion task mode, recognizes that the two hand start command has been input.

11. The electronic apparatus of claim 9 or 10, wherein if a shake motion of simultaneously shaking the two hands a plurality of times is input through the motion input unit, the controller recognizes that the two hand start command has been input.

12. The electronic apparatus of any one of claim 9 to claim 11, wherein the motion task using the two hands is a task of magnifying or reducing a display screen.

13. The electronic apparatus of claim 12, wherein if a motion of moving the two hands away from each other is input when the two hand input guide GUI is displayed in an area of the display screen, the controller magnifies the display screen based on a predetermined location in an area where the two hand input guide GUI is displayed and reduces the display screen based on the predetermined location in the area where the two hand input guide GUI is displayed if a motion of moving the two hands closer together is input.

14. The electronic apparatus of claim 12 or claim 13, wherein the two hand input guide GUI is a single input guide GUI which is displayed in a central area of the display screen, or two pointers which are displayed in positions corresponding to positions of the two hands of a user.

15. The electronic apparatus of claim 14, wherein if a motion of moving the two hands is input through the motion input unit, the controller moves the two hand input guide GUI so that the two hand input guide GUI corresponds to the motion of moving the two hands.
